# EUROPEAN PATENT SPECIFICATION

(11) **EP 3 679 317 B1**
(45) Date of publication and mention of the grant of the patent: **15.10.2025**
(21) Application number: 18853546.2
(22) Date of filing: 21.08.2018
(51) Int. Cl.: G01B 7/04, G01B 11/04

(54) **METHOD AND CONTROL ARRANGEMENT FOR ESTIMATING VEHICLE DIMENSIONS**
VERFAHREN UND STEUERUNGSANORDNUNG ZUR SCHÄTZUNG VON FAHRZEUGABMESSUNGEN
PROCÉDÉ ET DISPOSITIF DE COMMANDE POUR ESTIMATION DE DIMENSIONS DE VÉHICULE

(30) Priority: 07.09.2017 SE 1751081
(43) Date of publication of application: 15.07.2020
(73) Proprietor: Scania CV AB, 151 87 Södertälje (SE)
(72) Inventor: LARSSON, Christian, 113 36 Stockholm (SE); LUNDIN, Hjalmar, 126 36 Hägersten (SE)
(74) Representative: Scania CV AB
(86) International application number: PCT/SE2018/050842
(87) International publication number: WO 2019/050448

(56) References cited:
- WO-A1-02/23504
- WO-A1-2017/125571
- DE-A1- 102006 062 559
- GB-A- 2 514 127
- JP-A- 2013 120 398
- US-A1- 2004 075 847
- US-A1- 2011 095 908
- US-A1- 2011 238 241
- US-A1- 2011 298 603
- US-A1- 2015 066 349
- US-A1- 2016 362 135

## Description

### TECHNICAL FIELD

This document discloses a control arrangement in a vehicle and a method in a vehicle. More particularly, a method and a control arrangement is provided for estimating a dimension value of a vehicle.

### BACKGROUND

The length and other dimensions of a vehicle with/ without trailer is often not known. This is since the vehicle can be used for different applications, for which customisations are done after the vehicle has been produced and sold. Vehicles like trucks are often modified in different ways to serve the particular purposes of the vehicle owner, e.g. by providing a truck-mounted crane, a side-lifter crane, a concrete mixer, a snow ploughing equipment, a suction excavator, etc.; or by rebuilding the truck into an emergency vehicle, etc.

A vehicle could also carry different loads longer than the vehicle which can extend beyond the dimensions of the vehicle, or be connected to a trailer which is of unknown length for the electrical system. In some jurisdictions, it is allowed to road trains comprising a plurality of trailers. The vehicle may then not be able to detect how many trailers that have been connected to the truck, or the dimensions of these trailers.

In case the vehicle is a car, it is not possible to detect if a roof track/ roof box is mounted on the car; or whether any cargo has been placed on the vehicle roof, which may influence the centre of gravity of the car, and thereby also cornering ability of the vehicle. It may also influence air resistance and fuel consumption.

On a vehicle transporting cargo longer than the vehicle such as e.g. timber logs, construction material, or ore, there is currently no way to detect that a piece of the cargo is protruding from the structure of the vehicle; or to detect that the cargo is loose/ falls off the vehicle (besides driver observation).

Some vehicles will vary very much in weight while driving, such as e.g. city busses, distribution trucks, or a mining truck driving from a mine to a harbour with ore and then returning empty. Increased weight will affect e.g. cornering performance and appropriate driving speed of the vehicle.

However, in the case of city busses etc., it is not only the weight or number of passengers that affect cornering performance/ driving speed, but also whether there are standing passengers on-board. In case a human driver is present in the vehicle, he/ she typically adapts the acceleration, speed, deceleration and braking to the passenger situation.

An emerging technology is driving busses or trucks in groups of coordinated vehicles, or vehicle trains sometimes referred to as Bus Rapid Transit (BRT), wherein a driver is present only in the first vehicle while the other vehicles are autonomous and just follows the in front vehicle. In a scenario of coordinated vehicles, the driver may have severe problems to estimate whether there are standing passengers in any of the other vehicles.

On a completely autonomous vehicle or vehicle train, there is no convenient solution to this problem.

A possible solution may be to always drive the vehicle as if it was fully loaded, or crowded with standing passengers in case the vehicle is a bus. However, this leads to suboptimal driving speed and a severe decrease in transportation speed in comparison with conventional vehicles conducted by a human driver.

The vehicle dimensions such as length, including connected trailers and/ or any protruding cargo is needed for advanced driver assistance systems where the driving is automated as well as for autonomous driving applications. Especially for applications where the vehicle should make turn or driving backwards, and for determining the centre of gravity of the vehicle.

The document JP2013120398 illustrates an apparatus for estimating length of a vehicle. The length of the vehicle is estimated by taking a first image of the road with a front side camera of the vehicle and a second image of the road with a rear side camera of the vehicle. Based on the captured images and by extracting features of the images, by mapping the extracted features and by using knowledge of the travelling speed, the vehicle length may be estimated.

Unfortunately, the described arrangement can only estimate length of the vehicle and not any other vehicle dimensions. Further, the arrangement is dependent upon using two dedicated cameras mounted on the vehicle, which add costs.

Document JP2009070097 describes another method to estimate length of a vehicle. A vehicle is detected and a vehicle shadow is extracted. The length of the vehicle is determined by measuring the length of the vehicle shadow.

Again, the presented method only estimates length of the vehicle and not any other vehicle dimensions. Further, the method is dependent on particular dedicated equipment both in the vehicle and outside the vehicle, which add costs to the solution. Further, the shadow length will be different at different times of the day and different when measured in sun light and in artificial light.

Document US20160362135 describes a method for determining length of a trailer by using sensors both on the trailer and on the truck.

However, the method only measure length of the trailer, not of the vehicle as a whole. No other dimensions are measured. Again, particular dedicated sensors on the truck and the trailer are used, which adds costs.

The document US2015066349 discloses a method for determining the length of a vehicle according to the state of the art.

It appears that further development is required for improving determination of vehicle dimensions.

### SUMMARY

It is therefore an object of this invention to solve at least some of the above problems and determine a dimension of a vehicle.

According to a first aspect of the invention, this objective is achieved by a method to be performed by a control arrangement in a road vehicle. The method aims at estimating a dimension value of the road vehicle, or a vehicle combination comprising the road vehicle. The method comprises receiving sensor data from at least one vehicle external sensor via a wireless signal. Further, the method also comprises estimating the dimension value of the road vehicle, or the vehicle combination, based on the received sensor data, and determining if the road vehicle has a trailer connected to it, based on the estimated dimension value.

According to a second aspect of the invention, this objective is achieved by a control arrangement in a road vehicle. The control arrangement aims at estimating a dimension value of the road vehicle, or a vehicle combination comprising the road vehicle. The control arrangement is configured to receive sensor data from at least one vehicle external sensor via a wireless signal. Furthermore, the control arrangement is configured to estimate the dimension value of the road vehicle, or the vehicle combination, based on the received sensor data, and to determine if the road vehicle has a trailer connected to it, based on the estimated dimension value.

Thanks to the described aspects, by utilising various sensors that are mounted on infrastructure surrounding the vehicle, or alternatively on another vehicle, and by collecting sensor information wirelessly, the sensor data may be used for obtaining various data of the vehicle, such as detecting modifications that has been made on the vehicle; detecting which kind of trailer that has been attached to the vehicle, and dimensions thereof; estimating weight distribution of the cargo on the vehicle/ trailer, etc. Thereby, various dimensional values of the vehicle, or the vehicle combination comprising the vehicle, may be determined and this information may be used during navigation of the vehicle.

Other advantages and additional novel features will become apparent from the subsequent detailed description.

### FIGURES

Embodiments of the invention will now be described in further detail with reference to the accompanying figures, in which:
- **Figure 1**: illustrates a side view of a vehicle combination according to an embodiment;
- **Figure 2A**: illustrates a vehicle combination and a vehicle external sensor, according to an embodiment;
- **Figure 2B**: illustrates a vehicle combination and a vehicle external sensor, according to an embodiment, seen from above;
- **Figure 3**: illustrates a vehicle combination and a vehicle external sensor, according to an embodiment, seen from above;
- **Figure 4A**: illustrates a vehicle combination and a vehicle external sensor, according to an embodiment;
- **Figure 4B**: illustrates a vehicle combination and a vehicle external sensor, according to an embodiment;
- **Figure 5**: illustrates a vehicle interior according to an embodiment;
- **Figure 6**: is a flow chart illustrating an embodiment of the method;
- **Figure 7**: is an illustration depicting a system according to an embodiment.

### DETAILED DESCRIPTION

Embodiments of the invention described herein are defined as a control arrangement and a method in a vehicle, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

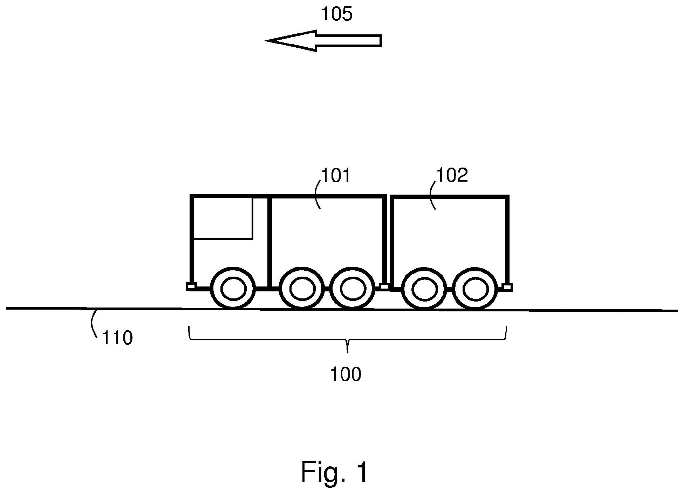

**Figure 1** illustrates a scenario with a vehicle combination **100** comprising a vehicle **101** and a trailer **102,** driving in a direction **105** on a road **110.**

The vehicle combination 100 may comprise a vehicle 101 with a plurality of trailers 102 in some particular embodiments. Further, the vehicle 101, the trailers 102 and/ or the vehicle combination 100 may comprise post production added instruments, such as e.g. a truck-mounted crane, a side-lifter crane, a concrete mixer, a snowplough, a grader, a farming tool, an irrigation device, a construction equipment, a suction excavator, a roller, a lawn mower, a harvesting device and/ or a cleaning device, or similar device.

The vehicle 101/ vehicle combination 100 may comprise a means for transportation in broad sense such as e.g. a truck, a car, a motorcycle, a trailer, a bus, a military vehicle, and a rescue vehicle.

The vehicle 101/ vehicle combination 100 is configured for running on a road.

The vehicle 101/ vehicle combination 100 may be driver controlled or driverless (i.e. autonomously controlled) in different embodiments. However, for enhanced clarity, the vehicle 101 is subsequently described as having a driver.

The driving direction 105 of the vehicle 101/ vehicle combination 100 may be determined based on the location of the destination of the journey, or by extrapolating the driving direction based on previously determined geographical positions and possibly knowledge of the road direction, e.g. from stored map data.

Since a dimension value of the vehicle 101 and/ or the vehicle combination 100 may be unknown, or be continuously altered depending on the application of the vehicle 101, one or several sensors situated on other vehicles and/ or infrastructure at the road side may be used for performing measurements on the vehicle 101/ vehicle combination 100 and thereby estimate the requested dimension value. The dimension value may comprise e.g. vehicle length, vehicle height, vehicle width, vehicle weight, vehicle type, trailer type, vehicle combination length, vehicle combination height, vehicle combination width, vehicle combination weight, axle weight of vehicle/ trailer/ vehicle combination, vehicle combination type, or similar dimension value of the vehicle 101.

However, the dimension value of the vehicle 101 and/ or the vehicle combination 100 may in some alternative embodiments comprise any dimensional parameter related to the vehicle 101, such as e.g. light distribution of the vehicle 101.

The sensor may comprise e.g. a camera, a stereo camera, an infrared camera, a video camera, a radar, a lidar, an ultrasound device, a time-of-flight camera, or similar device, in different embodiments.

For example, a lamp post or other infrastructure may comprise the sensor in form of a camera. When the vehicle 101 and/ or the vehicle combination 100 passes, a photo thereof may be captured by the camera. By knowing the distance between the position of the camera and the road 110 (and thereby also the vehicle 101 and/ or the vehicle combination 100), and by making an image analysis, the length, the height, the shape, the presence of an added tool etc., on the vehicle 100 and/ or the vehicle combination 100, may be determined by a control arrangement configured for image recognition/ computer vision and object recognition.

Computer vision is a technical field comprising methods for acquiring, processing, analysing, and understanding images and, in general, high-dimensional data from the real world in order to produce numerical or symbolic information. A theme in the development of this field has been to duplicate the abilities of human vision by electronically perceiving and understanding an image. Understanding in this context means the transformation of visual images (the input of retina) into descriptions of world that can interface with other thought processes and elicit appropriate action. This image understanding can be seen as the disentangling of symbolic information from image data using models constructed with the aid of geometry, physics, statistics, and learning theory. Computer vision may also be described as the enterprise of automating and integrating a wide range of processes and representations for vision perception.

The image data of the sensors may take many forms, such as e.g. images, video sequences, views from multiple cameras, or multi-dimensional data from a scanner.

Further, the infrastructure comprising the sensor may also comprise a wireless communication device for wireless communication with the vehicle 101.

Other examples of road-side infrastructure comprising the sensor may comprise e.g. traffic lights, traffic signs, buildings, etc.

The wireless communication may comprise, or at least be inspired by wireless communication technology such as Wi-Fi, Wireless Local Area Network (WLAN), Ultra Mobile Broadband (UMB), Bluetooth (BT), Near Field Communication (NFC), Radio-Frequency Identification (RFID), optical communication such as Infrared Data Association (IrDA) or infrared transmission to name but a few possible examples of wireless communications in some embodiments.

In some embodiments, the communication between vehicle 101 and the vehicle external sensor may be performed via Vehicle-to-Vehicle (V2V) communication, e.g. based on Dedicated Short-Range Communications (DSRC) devices. DSRC works in 5.9 GHz band with bandwidth of 75 MHz and approximate range of 1000 m in some embodiments.

The wireless communication may be made according to any IEEE standard for wireless vehicular communication like e.g. a special mode of operation of IEEE 802.11 for vehicular networks called Wireless Access in Vehicular Environments (WAVE). IEEE 802.11p is an extension to 802.11 Wireless LAN medium access layer (MAC) and physical layer (PHY) specification.

The communication may alternatively be made over a wireless interface comprising, or at least being inspired by radio access technologies such as e.g. 5G, 4G, 3GPP LTE, LTE-Advanced, E-UTRAN, UMTS, GSM, GSM/ EDGE, WCDMA, Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), or similar, just to mention some few options, via a wireless communication network.

The control arrangement in the vehicle 101 may thereby receive measurement values of the sensor and based thereupon, the dimension value may be determined and possibly stored in a memory device in the vehicle 101. Thereby, an anomaly, or deviation from an expected value, may be made.

The advantage with this solution is that a new source of information for the vehicle 101 (with or without trailer 102) length (or other dimension), which does not exist today. The information is useful for automated driving, but also e.g. for determining post-production modifications of the vehicle 101; load of the vehicle 101; etc.

The information obtained from the vehicle external sensor may either be the primary source to estimate the dimension value; or be used as a redundant source. Since the length, weight and other dimensions may be altered due to different loads, continuously measuring the dimension value is useful.

Another advantage is to obtain a redundant source to determine if the vehicle 101 has a trailer 102 connected to it. This information is transmitted by the communication network between the trailer 102 and the vehicle 101 today. But if the network is malfunctioning, this source can be used to determine if the vehicle 101 have a trailer 102 or not. It can also be used to verify that the trailer 102 has the expected or appropriate size, for example.

Yet an advantage of the described method is that, in case the vehicle 101 has been modified after production with e.g. a crane or similar instrument, the control arrangement becomes aware of the modification and may modify various calculations due to this information. Also, a check may be made that the added instrument is not situated in a dangerous, unlocked position.

In some particular embodiments wherein the vehicle 101 is a bus, it may be determined based on the obtained sensor information, how many passengers that is situated on a bus and/ or how many standing passengers there are on the vehicle 101/ bus. This information may be used for adjusting speed, acceleration and/ or deceleration when braking, for example.

In yet some particular embodiments, obtained sensor information, i.e. image data, of the driver, obtained from the vehicle external sensor may be checked against previously stored image data of the driver stored in a list of authorised drivers/ owners of the vehicle 101. In case the obtained sensor data does not correspond to the previously stored data of the allowed drivers/ owners, a control signal may be generated to break the engine ignition, activate the brakes, igniting emergency lights, activating thief alarm, locking cabin doors, or performing other measure for avoiding further conveyance of the vehicle 101, as the driver is a non-authorised driver, possibly a car thief. It may thereby be avoided that the vehicle 101 is stolen, or used by a non-authorised driver.

In other embodiments, obtained sensor information, i.e. image data of the driver may be checked against a vehicle external driver license database in order to automatically check if the driver has a valid driver license for the identified vehicle 101/ vehicle combination 100; or against a vehicle external database of fugitives, etc., which may simplify the work of public authorities spotting illegal drivers and criminals in general.

In yet some embodiments, an error or anomaly of the vehicle 101, the trailer 102 and/ or the vehicle combination 100, may be detected, e.g. by comparing a current sensor value with a previously recorded and stored sensor value.

An arbitrary example of such anomaly detected on the vehicle 100 may be e.g. changes in light distribution implies broken or misfit lamps, dirty or broken lamp glass etc.; lack of direction indication light when using the direction indicator implies dirty or broken indicator lamps; changes in cabin roll-, yaw or pitch angle implies broken cab suspension; detection of errors of high beam area may trigger adjustment of the light; detection of errors in Adaptive Main Beam function (i.e. that the high beam is turned down when meeting another vehicle or traffic user); detection of unsecured cargo; error detection for rain sensor, etc. The anomaly detection may trigger an appropriate action, such as transmitting a warning message or alert.

This may be an advantage in particular when the vehicle 101 is autonomous, as there then may be no driver present.

Another example may be, in case it is detected that the vehicle body panel, vehicle glass and/ or sensor lenses are dirty, a recommendation may be made to drive to a car wash, in some embodiments.

In some embodiments, the anomaly may be recognised in the sensor data by deep learning (sometimes also referred to as deep structured learning, hierarchical learning and/ or deep machine learning); a branch of machine learning based on a set of algorithms that attempt to model high-level abstractions in data by using multiple processing layers with complex structures, or otherwise composed of multiple non-linear transformations. Deep learning is based on learning representations of data. A sensor observation (e.g., an image) may be represented in many ways such as a vector of intensity values per pixel, or in a more abstract way as a set of edges, regions of particular shape, etc.

Deep learning typically uses a cascade of many layers of nonlinear processing units for feature extraction and transformation. Each successive layer uses the output from the previous layer as input. The algorithms may be supervised or unsupervised and applications may comprise pattern analysis (unsupervised) and classification (supervised). Further, deep learning may be based on the (unsupervised) learning of multiple levels of features or representations of the data. Higher level features may be derived from lower level features to form a hierarchical representation. By Deep learning, multiple levels of representations that correspond to different levels of abstraction are learned; the levels form a hierarchy of concepts. The composition of a layer of nonlinear processing units used in a deep learning algorithm depends on the problem to be solved, i.e. recognising the anomaly.

Other examples of anomalies comprising a deviation from an expected condition of the vehicle 101, the trailer 102 and/ or the vehicle combination 100, under current driving conditions may be that a door of the vehicle 101 is open while driving; a crane is in upright position while driving; a pair of glasses (or other arbitrary object) has been left on the vehicle roof when the drive is about to commence; a piece of the driver's clothes has been jammed in the door; a piece of a passenger's clothes has been jammed in the door when exiting (e.g. in a mass transportation vehicle); the vehicle doors are unlocked when driving into a harsh suburban neighbourhood, frequently visited by carjackers; a person under 18 years old (or a non-authorised person) is trying to start the vehicle 101, etc.

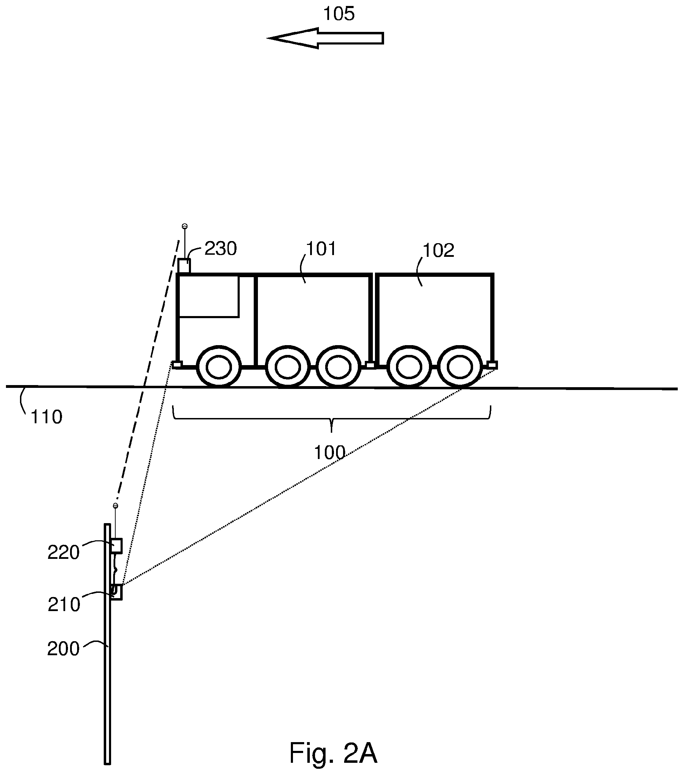

**Figure 2A** illustrates a vehicle combination 100 comprising a vehicle 101 and a trailer 102, as previously illustrated in Figure 1. The vehicle combination 100 is driving in a driving direction 105 on a road 110, approaching a road-side structure 200, external to the own vehicle 101/ vehicle combination 100.

The road-side structure 200 may comprise e.g. a lamp post, a traffic sign, a traffic light, a building, a bridge, a round-about, a road side fence, a tunnel, a road payment station, etc.

The road-side structure 200 comprises a vehicle external sensor **210.** The vehicle external sensor 210 may comprise e.g. a camera, a stereo camera, an infrared camera, a video camera, a radar, a lidar, an ultrasound device, a time-of-flight camera, or similar device, in different embodiments. Further, the road-side structure 200 may comprise a plurality of vehicle external sensors 210 in some alternative embodiments. These sensors 210 may be of the same, or different types. The sensor 210 may capture a side-view and/ or a top-view sensor image of the vehicle 101/ vehicle combination 100, in different embodiments.

Further, the road-side structure 200 may comprise a wireless communication device **220.** The wireless communication device 220 is configured for wireless communication with the vehicle 101 over any of the previously enumerated wireless communication interfaces. The wireless communication device 220 may be integrated in the sensor 210, in some embodiments.

The vehicle 101 may also comprise a wireless communication device **230,** configured for receiving sensor data over the wireless communication interface from the wireless communication device 220 of the road-side structure 200.

A control arrangement of the vehicle 101 may utilise the obtained sensor information in a plurality of ways. For example, a dimension value of the vehicle 101, the trailer 102, and/ or the vehicle combination 100 may be determined, such as for example length/ height/ width of the vehicle 101, the trailer 102, and/ or the vehicle combination 100; the shape of the vehicle 101, the trailer 102, and/ or the vehicle combination 100; presence of a trailer 102; identification of the vehicle type, and/ or trailer type; determination whether the vehicle 101, or the trailer 102 comprises a tool or instrument added to the vehicle 101/ trailer 102 after production thereof; axle load of the vehicle/ trailer/ vehicle combination, etc.

In case the load or cargo of the vehicle 101, the trailer 102, and/ or the vehicle combination 100 is detectable, weight of the vehicle 101, the trailer 102, and/ or the vehicle combination 100 may be estimated. It may be noted that cargo, and placement thereof on a covered long haulage trailer may be detected by emitting an ultrasonic wave and detecting and analysing the reflections. Further, it may be detected that the load or cargo is lose (e.g. on a timber vehicle or mine dumpers), and an appropriate measure may be made, such as for example warning the driver (if any present) or other vehicle responsible person (otherwise); stopping the vehicle 101; igniting emergency lights of the vehicle 101/ vehicle combination 100; etc. Further, in some embodiments, the distribution of the load/ cargo on the vehicle 101/ vehicle combination 100 may be detected and used for calculating centre of gravity of the vehicle 101/ vehicle combination 100. An example may be a car carrier trailer; where the number of carried cars and their distribution on the trailer will influence both the weight and the centre of gravity of the vehicle 101/ vehicle combination 100. The weight of each carried car may be estimated with an approximate value, for example.

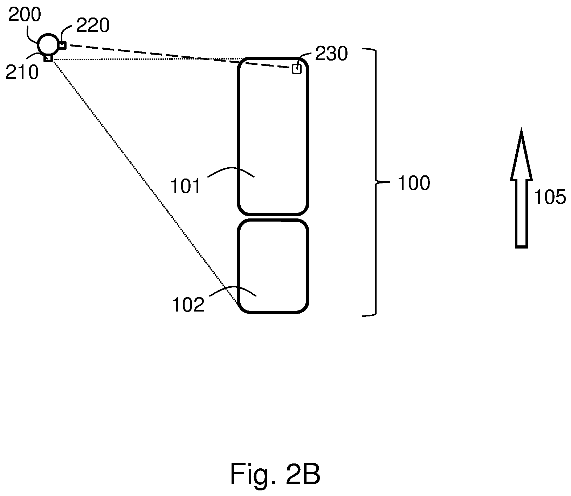

**Figure 2B** illustrates a vehicle combination 100 comprising a vehicle 101 and a trailer 102, as previously illustrated in Figure 2A, as illustrated from an above perspective. The vehicle combination 100 is driving in a driving direction 105 on a road 110, approaching a road-side structure 200, external to the own vehicle 101/ vehicle combination 100.

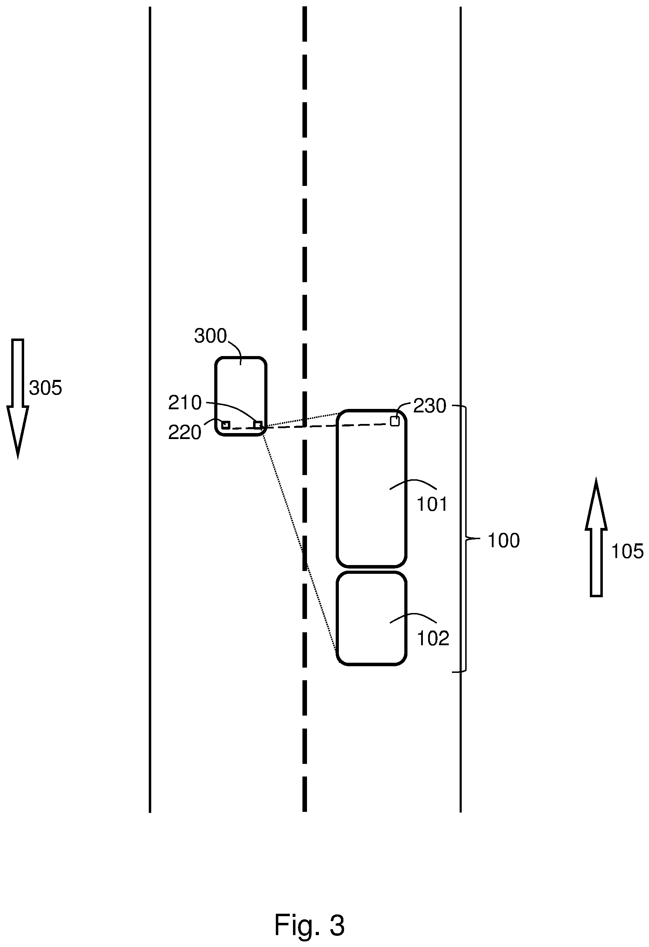

**Figure 3** also illustrates a vehicle combination 100 comprising a vehicle 101 and a trailer 102, as previously illustrated in Figure 1, Figure 2A and/ or Figure 2B, as illustrated from an above perspective. However, in this case, the vehicle external sensor 210 is situated on another vehicle **300.**

The other vehicle 300 thus comprises the vehicle external sensor 210 and a wireless communication device 220. A sensor image, or a sequence of sensor images, may be captured by the vehicle external sensor 210 when the other vehicle 300 is passing the vehicle 101/ vehicle combination 100; either in another driving direction **305,** deviating from the driving direction 105 of the vehicle 101/ vehicle combination 100, or when overtaking in the same driving direction 105.

The captured sensor data/ information may then be wirelessly communicated by the wireless communication device 220 e.g. via any of the previously enumerated wireless communication technologies and received by a wireless communication device 230, configured for receiving sensor data over the wireless communication interface from the wireless communication device 220 of the other vehicle 300.

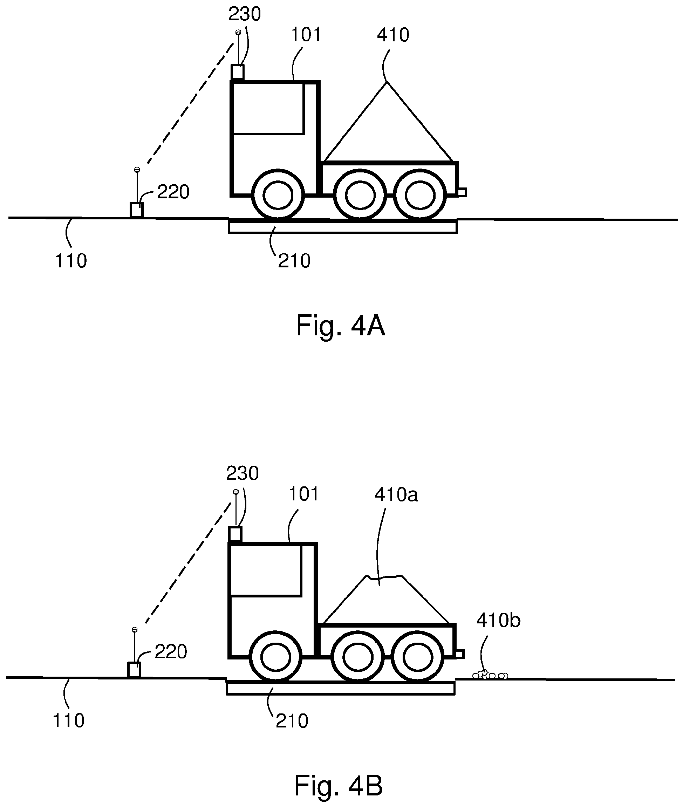

**Figure 4A** illustrates a vehicle 101 carrying cargo **410.** The vehicle 101 is driving on the road 110, passing a sensor 210, which in this case is embodied as a weight sensor. The sensor 210 may be integrated in the road 110 in some embodiments. The weight of the vehicle 101, including the cargo 410, is measured by the sensor 210 and the result is wirelessly forwarded via a wireless communication device 220, to the wireless communication device 230 of the vehicle 101. The weight of the vehicle 101 including the cargo 410 may be made for example when loading the vehicle 101, or when initiating the journey to its destination. The resulting weight may be stored in a data memory of the vehicle 101, possibly associated with a time stamp.

In other embodiments, the axle load of the vehicle 101, the trailer 102 and/ or the vehicle combination 100 may be estimated by the sensor 210. This information may be used e.g. to determine if the vehicle 101/ vehicle combination 100 is allowed to follow a certain route, on which axle load may be limited. The determined axle load may be stored in the data memory of the vehicle 101, possibly associated with a time stamp.

**Figure 4B** illustrates a vehicle 101 carrying a cargo 410, as previously illustrated in Figure 4A, but illustrated at a later period in time. A subset of the cargo 410b has been dropped on the road 110. The weight of the vehicle 101, including the remaining cargo 410a, is determined by the weight sensor 210. The weight of the vehicle 101 and the remaining cargo 410a is measured by the weight sensor 210 and the result is wirelessly forwarded via a wireless communication device 220, to the wireless communication device 230 of the vehicle 101.

The determined weight may be compared with a previously determined and stored weight of the vehicle 101/ cargo 410 and when a difference (exceeding a predetermined or configurable threshold level) is detected, it may be determined that a subset of the cargo has been lost. Appropriate measures may then be triggered, such as e.g. alerting the driver, stopping the vehicle 101, etc.

In case axle load previously has been measured on the vehicle 101, the trailer 102 and/ or the vehicle combination 100, a comparison with a previously stored axle weight may be made. In case the axle loads deviate from previously stored axle load values (exceeding a threshold value), the reason may be that the cargo has been lost or been displaced. A warning may then be emitted to the driver.

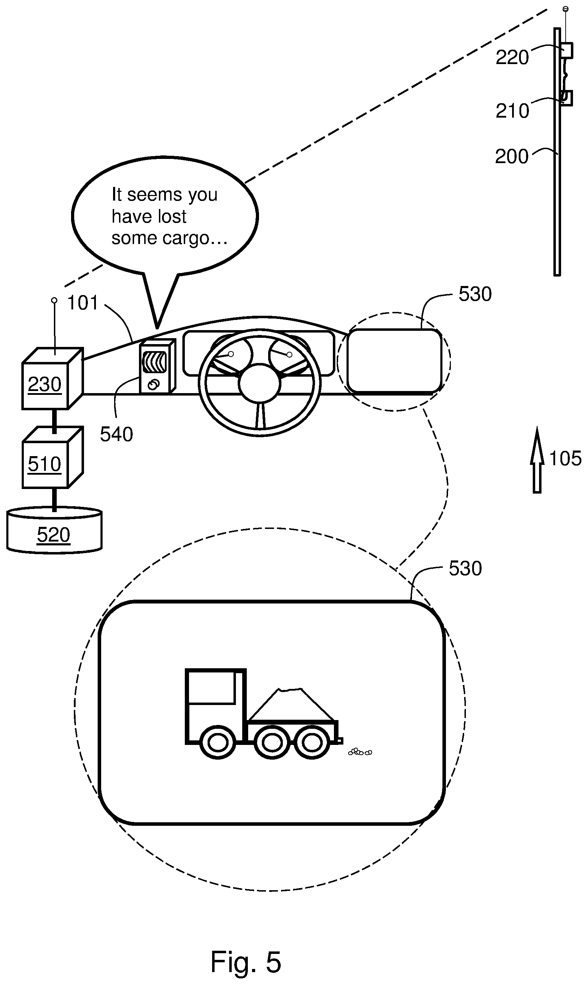

**Figure 5** illustrates a vehicle 101 carrying a cargo 410, such as e.g. previously illustrated in Figure 4A and/ or Figure 4B.

The vehicle 101 is driving in a driving direction 105 on a road 110, approaching a road-side structure 200, external to the own vehicle 101. The road-side structure 200 comprises a vehicle external sensor 210, e.g. a camera or similar. Further, the road-side structure 200 may comprise a wireless communication device 220.

The vehicle 101 may receive image data, measured by the vehicle external sensor 210, wirelessly from the wireless communication device 220 of the road-side structure 200. The vehicle 101 may receive the image data by a wireless communication device 230.

The vehicle 101 comprises a control arrangement **510,** configured to estimate a dimension value of the vehicle 101, based on the received image data obtained via the wireless communication device 230.

Further, the vehicle 101 comprises a memory 520, configured to store the estimated dimension value, possibly associated with a time reference.

At a later point in time, when receiving image data from another vehicle external sensor 210; or the same vehicle external sensor 210 at the later point in time, the control arrangement 510 may extract previously stored sensor data from the memory 520 and a comparison may be made between the recently received sensor data and the previously stored sensor data. An analysis of any detected difference may then be made by the control arrangement 510. Thereby, the dimension value may be estimated, such as e.g. the size of the cargo, the distribution of the cargo, weight estimation of the vehicle 101, etc. In the illustrated scenario, cargo on the vehicle 101 has diminished between two received sensor measurements, as detected by the control arrangement 510.

Further, the vehicle 101 may comprise an image output unit **530,** such as e.g. a display, a projector, a head-up display, a display integrated in the windshield of the vehicle 101, a display integrated in the dashboard of the vehicle 101, a tactile device, a portable device of the vehicle driver/ owner, a set of close-eyes displays (i.e. intelligent glasses) of the vehicle driver/ owner, etc.; or a combination thereof. Further, the vehicle 101 may comprise a loudspeaker **540,** for outputting auditive information to the driver.

In the illustrated example, an image (side view) of the vehicle 101 may be outputted in the image output unit 530 while an auditive alert may be outputted to the driver via the loudspeaker 540.

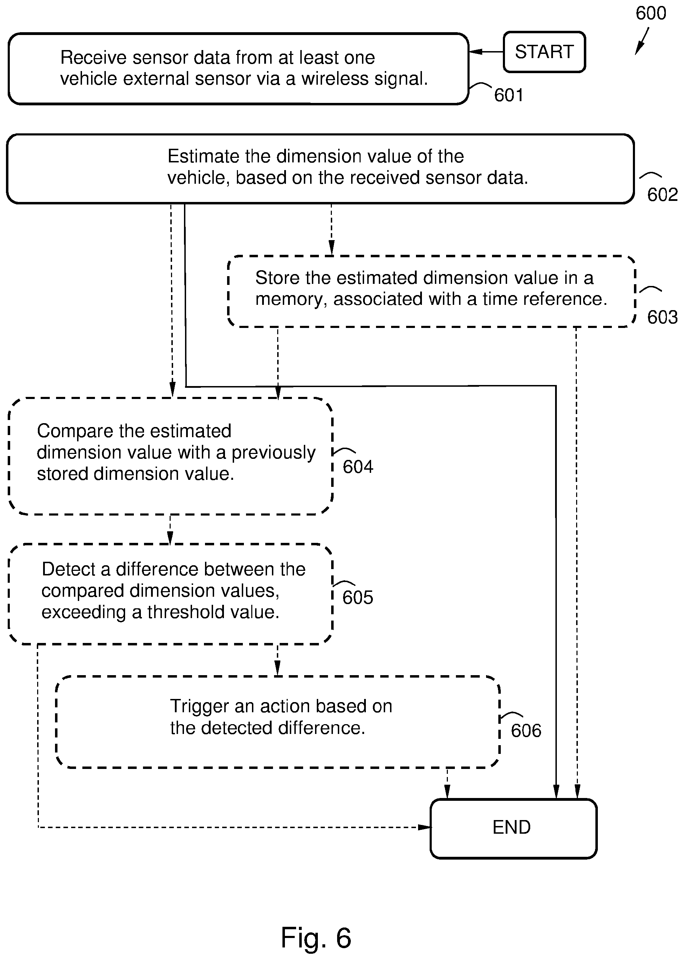

**Figure 6** illustrates an example of a method **600** according to an embodiment. The flow chart in Figure 6 shows the method 600 in a control arrangement 510 in a vehicle 101.

The method 600 aims at estimating a dimension value of the vehicle 101, or a vehicle combination 100 comprising the vehicle 101. The vehicle combination 100 may typically comprise one vehicle 101 and one or more trailers 102. Based on the estimated dimension value, an anomaly or deviation from an expected value may be detected.

The dimension value comprises any of vehicle length, vehicle height, vehicle width, vehicle weight, vehicle type, trailer type, vehicle combination length, vehicle combination height, vehicle combination width, vehicle combination weight; axle load of the vehicle 101, the trailer 102 and/ or the vehicle combination 100; and/ or vehicle combination type. However, the dimension value may also, or alternatively comprise a shape of the vehicle 101, the trailer 102 and/ or the vehicle combination 100, or a subset thereof; or an anomaly or deviation from an expected state of the vehicle 101, the trailer 102 and/ or the vehicle combination 100.

In order to be able to estimate the dimension value, the method 600 may comprise a number of steps **601-606.** However, some of these steps 601-606 may be performed solely in some alternative embodiments, like e.g. steps 603-606. Further, the described steps 601-606 may be performed in a somewhat different chronological order than the numbering suggests. The method 600 may comprise the subsequent steps:
**Step 601** comprises receiving sensor data from at least one vehicle external sensor 210 via a wireless signal. The vehicle external sensor 210 may be comprised e.g. in a road-side structure 200, external to the vehicle 101; and/ or in another vehicle 300.

Such vehicle external sensor 210 may be based on electromagnetic radiation such as e.g. infra-red light, laser, micro waves and/ or visible light, in different embodiments.

The vehicle external sensor 210 may be situated on a road-side structure 200, or on another vehicle 300.

Step 602 comprises estimating the dimension value of the vehicle 101, or the vehicle combination 100, based on the received 601 sensor data.

The dimension value may be estimated e.g. by image recognition/ computer vision and object recognition.

Computer vision is a technical field comprising methods for acquiring, processing, analysing, and understanding images and, in general, high-dimensional data from the real world in order to produce numerical or symbolic information. A theme in the development of this field has been to duplicate the abilities of human vision by electronically perceiving and understanding an image. Understanding in this context means the transformation of visual images (the input of retina) into descriptions of world that can interface with other thought processes and elicit appropriate action. This image understanding can be seen as the disentangling of symbolic information from image data using models constructed with the aid of geometry, physics, statistics, and learning theory. Computer vision may also be described as the enterprise of automating and integrating a wide range of processes and representations for vision perception.

Thereby, an anomaly such as an unfavourable condition of the vehicle 101, the trailer 102, the vehicle combination 100 and/ or the cargo 410 there upon may be detected and appropriate measures may be triggered. Thereby, traffic security is enhanced.

**Step 603,** which may be comprised only in some particular embodiments, comprises storing the estimated 602 dimension value in a memory 520 of the vehicle 101, associated with a time reference.

By storing the estimated 602 dimension value in the memory 520 associated with the time reference, it becomes possible to later compare the dimension value over time and detect any deviation.

**Step 604,** which may be comprised only in some particular embodiments, comprises comparing the estimated 602 dimension value with a previously stored dimension value.

**Step 605,** which may be comprised only in some particular embodiments wherein step 604 has been performed, comprises detecting a difference between the compared 604 dimension values, exceeding a threshold value.

The threshold value may be predetermined or configurable in different embodiments. It may thereby be noted that cargo has been lost, but also e.g. that the vehicle 101 has been modified, or that a trailer 102 has been attached to the vehicle 101, for example.

**Step 606,** which may be comprised only in some particular embodiments wherein step 604 and step 605 have been performed, comprises triggering an action based on the detected 605 difference.

The triggered action may comprise e.g. adjusting dimensional parameters utilised in calculations related to the vehicle 101, or the vehicle combination 100 comprising the vehicle 101; stopping the vehicle 101 at the road side; and/ or alerting a vehicle responsible person concerning the detected 605 difference. In case the vehicle 101 is halted at the road side, emergency lights on the vehicle 101/ vehicle combination 100 may be ignited.

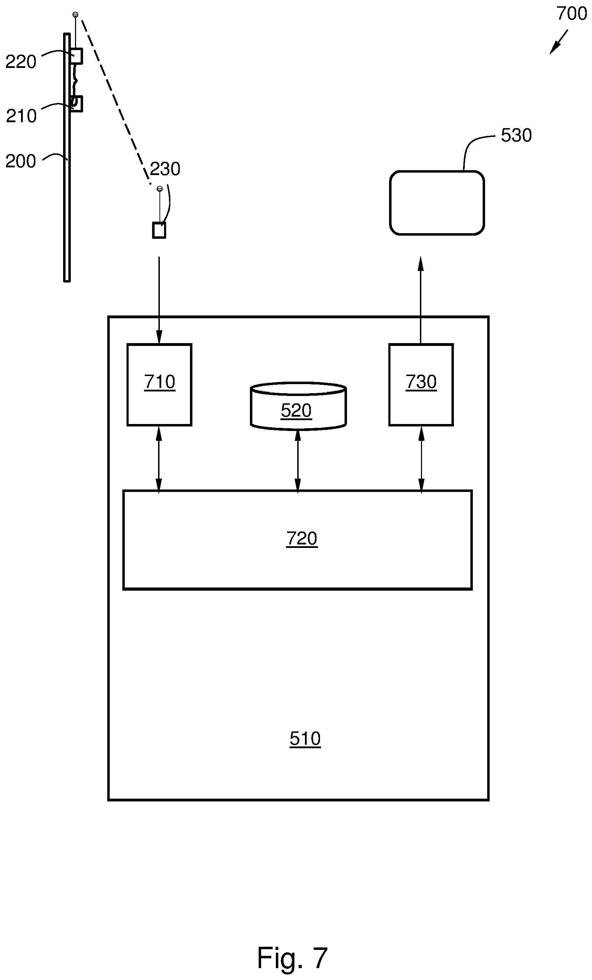

**Figure 7** presents a system **700.** The system 700 aims at estimating a dimension value of the vehicle 101, or a vehicle combination 100 comprising the vehicle 101. The system 700 comprises a control arrangement 510, in a vehicle 101. The control arrangement 510 is configured to perform the method 600 for estimation of a dimension value of the vehicle 101, or a vehicle combination 100 comprising the vehicle 101, according to at least some of the previously described steps 601-606.

The control arrangement 510 is configured to receive sensor data from at least one vehicle external sensor 210 via a wireless signal. Further, the control arrangement 510 is further configured to estimate the dimension value of the vehicle 101, or the vehicle combination 100, based on the received sensor data.

In some particular embodiments, the control arrangement 510 may also be configured to compare the estimated dimension value with a previously stored dimension value. Also, the control arrangement 510 may be configured to detect a difference between the compared dimension values, exceeding a threshold value, in some embodiments. The control arrangement 510 may be configured to trigger an action, based on the detected difference.

In yet some alternative embodiments, the control arrangement 510 may also be configured to store the estimated dimension value in a memory 520, associated with a time reference.

The memory 520, or computer data storage is a technology consisting of computer components and recording media used to retain digital data. The memory 520 may comprise e.g. a secondary storage means such as a mass storage device (hard disc); and off line storage means such as a removable media drive such as Compact Disc-ReWritable (CD-RW), Digital Versatile Disc rewritable (DVD RW, DVD-R, DVD+R, DVD-VR) a removable medium such as a CD-RW and/ or a tertiary storage.

The control arrangement 510 may comprise a receiver **710** configured for receiving information via the wireless communication device 230, from a vehicle external sensor 210.

The control arrangement 510 further may comprise a processor **720** configured for performing various calculations for conducting the method 600 according to at least some of steps 601-606.

Such processor 720 may comprise one or more instances of a processing circuit, i.e. a Central Processing Unit (CPU), a processing unit, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the control arrangement 510 may comprise an optional memory **725** in some embodiments. The optional memory 725 may comprise a physical device utilised to store data or programs, i.e., sequences of instructions, on a temporary or permanent basis. According to some embodiments, the memory 725 may comprise integrated circuits comprising silicon-based transistors. The memory 725 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Further, the control arrangement 510 may comprise a signal transmitter **730.** The signal transmitter 730 may be configured for transmitting a signal to be received by an output unit 530 and/ or a loudspeaker 540, in some embodiments.

The previously described steps 601-606 to be performed in the control arrangement 510 may be implemented through the one or more processors 720 within the control arrangement 510, together with a computer program comprising instructions for performing at least some of the functions of the steps 601-606. Thus a computer program, comprising instructions for performing the steps 601-606 in the control arrangement 510 may perform the method 600 comprising at least some of the steps 601-606 for estimating a dimension value of the vehicle 101, or a vehicle combination 100 comprising the vehicle 101 when the computer program is executed by the one or more processors 720 of the control arrangement 510.

The described steps 601-606 thus may be performed by a computer algorithm, a machine executable code, a non-transitory computer-readable medium, or a software instructions programmed into a suitable programmable logic such as the processor 720 in the control arrangement 510.

The computer program product mentioned above may be provided for instance in the form of a data carrier carrying computer program code for performing at least some of the step 601-606 according to some embodiments when being loaded into the one or more processors 720 of the control arrangement 510. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the control arrangement 510 remotely, e.g., over an Internet or an intranet connection.

Further, some embodiments may comprise a vehicle 101, comprising the control arrangement 510, as described above, for performing the method 600 according to at least some of the described steps 601-606.

The terminology used in the description of the embodiments as illustrated in the accompanying drawings is not intended to be limiting of the described method 600, control arrangement 510; computer program, and/ or system 700. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A method (600) to be performed by a control arrangement (510) in a road vehicle (101), for estimating a dimension value of the road vehicle (101), or a vehicle combination (100) comprising the road vehicle (101), which method (600) comprises:
receiving (601) sensor data from at least one vehicle external sensor (210) via a wireless signal;
estimating (602) the dimension value of the road vehicle (101), or the vehicle combination (100), based on the received (601) sensor data; and
determining if the road vehicle (101) has a trailer (102) connected to it, based on the estimated dimension value.

2. The method (600) according to any one of the preceding claims, wherein the vehicle external sensor (210) is situated on a road-side structure (200), or on another vehicle (300).

3. The method (600) according to any one of the preceding claims, wherein the dimension value comprises any of vehicle length, vehicle height, vehicle width, vehicle weight, vehicle type, trailer type, vehicle combination length, vehicle combination height, vehicle combination width, vehicle combination weight, vehicle combination type.

4. A control arrangement (510) in a road vehicle (101), for estimating a dimension value of the road vehicle (101), or a vehicle combination (100) comprising the road vehicle (101), which control arrangement (510) is configured to:
receive sensor data from at least one vehicle external sensor (210) via a wireless signal; and
estimate the dimension value of the road vehicle (101), or the vehicle combination (100), based on the received sensor data; and to
determine if the road vehicle (101) has a trailer (102) connected to it, based on the estimated dimension value.

5. A computer program comprising program code for performing a method (600) according to any of claims 1-3 when the computer program is executed in a processor in a control arrangement (510), according to of claim 4.

## Patentansprüche

1. Verfahren (600), das durch eine Steuerungsanordnung (510) eines Straßenfahrzeugs (101) ausführbar ist, zur Schätzung eines Abmessungswerts des Straßenfahrzeugs (101) oder einer Fahrzeugkombination (100) umfassend das Straßenfahrzeug (101), wobei das Verfahren (600) umfasst:
Empfangen (601) von Sensordaten von wenigstens einem Sensor außerhalb des Fahrzeugs (210) über ein drahtloses Signal;
Schätzen (602) des Abmessungswerts des Straßenfahrzeugs (101) oder der Fahrzeugkombination (100) basierend auf den empfangenen (601) Sensordaten; und
Bestimmen basierend auf dem geschätzten Abmessungswert, ob das Straßenfahrzeug (101) einen mit ihm verbundenen Anhänger (102) aufweist.

2. Verfahren (600) nach einem der vorangehenden Ansprüche, wobei sich der Sensor außerhalb des Fahrzeugs (210) auf einer Struktur am Straßenrand (200) oder einem anderen Fahrzeug (300) befindet.

3. Verfahren (600) nach einem der vorangehenden Ansprüche, wobei der Abmessungswert einen der folgenden Werte umfasst: Fahrzeuglänge, Fahrzeughöhe, Fahrzeugbreite, Fahrzeuggewicht, Fahrzeugart, Anhängerart, Fahrzeugkombinationslänge, Fahrzeugkombinationshöhe, Fahrzeugkombinationsbreite, Fahrzeugkombinationsgewicht, Fahrzeugkombinationsart.

4. Steuerungsanordnung (510) in einem Straßenfahrzeugs (101) zur Schätzung eines Abmessungswerts des Straßenfahrzeugs (101) oder einer Fahrzeugkombination (100) umfassend das Straßenfahrzeug (101), wobei die Steuerungsanordnung (510) dazu konfiguriert ist,
Sensordaten von wenigstens einem Sensor außerhalb des Fahrzeugs (210) über ein drahtloses Signal zu empfangen; und
den Abmessungswerts des Straßenfahrzeugs (101) oder der Fahrzeugkombination (100) basierend auf den empfangenen Sensordaten zu schätzen; und
basierend auf dem geschätzten Abmessungswert zu bestimmen, ob das Straßenfahrzeug (101) einen mit ihm verbundenen Anhänger (102) aufweist.

5. Computerprogramm umfassend Programmcode zur Ausführung eines Verfahrens (600) nach einem der Ansprüche 1-3, wenn das Computerprogramm in einem Prozessor in einer Steuerungsanordnung (510) nach Anspruch 4 ausgeführt wird.

## Revendications

1. Procédé (600) à exécuter par un agencement de commande (510) dans un véhicule routier (101), pour estimer une valeur de dimension du véhicule routier (101), ou une combinaison de véhicules (100) comprenant le véhicule routier (101), lequel procédé (600) comprend :
la réception (601) de données de capteur depuis l'au moins un capteur externe de véhicule (210) via un signal sans fil ;
l'estimation (602) de la valeur de dimension du véhicule routier (101), ou de la combinaison de véhicules (100), sur la base des données de capteur reçues (601) ; et
la détermination de si le véhicule routier (101) a une remorque (102) connectée à celui-ci, sur la base de la valeur de dimension estimée.

2. Procédé (600) selon l'une quelconque des revendications précédentes, dans lequel le capteur externe de véhicule (210) est situé sur une structure côté route (200), ou sur un autre véhicule (300).

3. Procédé (600) selon l'une quelconque des revendications précédentes, dans lequel la valeur de dimension comprend l'un quelconque parmi la longueur du véhicule, la hauteur du véhicule, la largeur du véhicule, le poids du véhicule, le type de véhicule, le type de remorque, la longueur de la combinaison du véhicule, la hauteur de la combinaison du véhicule, la largeur de la combinaison du véhicule, le poids de la combinaison du véhicule, le type de combinaison du véhicule.

4. Agencement de commande (510) dans un véhicule routier (101), pour estimer une valeur de dimension du véhicule routier (101), ou une combinaison de véhicules (100) comprenant le véhicule routier (101), lequel agencement de commande (510) est configuré pour :
recevoir des données de capteur depuis l'au moins un capteur externe de véhicule (210) via un signal sans fil ; et
estimer la valeur de dimension du véhicule routier (101), ou de la combinaison de véhicules (100), sur la base des données de capteur reçues ; et à
déterminer si le véhicule routier (101) a une remorque (102) connectée à celui-ci, sur la base de la valeur de dimension estimée.

5. Programme informatique comprenant un code de programme pour l'exécution d'un procédé (600) selon l'une quelconque des revendications 1 à 3 lorsque le programme informatique est exécuté dans un processeur dans un agencement de commande (510), selon la revendication 4.
